# EUROPEAN PATENT APPLICATION

(11) **EP 4 656 613 A1**
(43) Date of publication of application: **03.12.2025**
(21) Application number: 24178634.2
(22) Date of filing: 28.05.2024
(51) Int. Cl.: C04B 28/08, C04B 28/14, C04B 28/16

(54) **AN INORGANIC BINDER COMPOSITION COMPRISING LADLE FURNACE SLAG AND BAUXITE RESIDUE**

(71) Applicant: ResourceFull BV, 3000 Leuven (BE)
(72) Inventor: DIQUELOU, Youen, 4000 Liège (BE); ARNOUT, Lukas, 3010 Kessel-Lo (BE); LAPAUW, Thomas, 3010 Kessel-Lo (BE); BHATT, Nehal Manoj, 3630 Maasmechelen (BE)
(74) Representative: IPLodge bv

(57) **Abstract**

The present invention suggests an inorganic binder composition comprising a ladle furnace slag, a CaSO₄-source, a retarding compound and a bauxite residue. Moreover, the present invention suggests a process for producing that inorganic binder composition as well as the use of that inorganic binder composition for forming a building product.

## Description

### Technical Field

The present invention relates to an inorganic binder composition comprising a ladle furnace slag, a CaSO₄-source, a retarding compound and a bauxite residue. Moreover, the present invention relates to a process for producing that inorganic binder composition as well as to the use of that inorganic binder composition for forming a building product.

### Background Art

The use of CaO-Al₂O₃ phases (calcium aluminate phases, 'CA') as cement constituent is known in the state of the art and there is a wide range of commercial products available on the market. One of the typical features of these CA cement types is the fact that, when mixed with water, they can result in a fast setting and hardening binder, resulting in a high production speed and a high economic value.

The production of CA cement is done at high temperatures, usually above 1300°C, and it often involves the melting of the compounds.

The combination of CA cement with CaSO₄-based compounds is also often used for applications where low or no shrinkage is required. The proper dosage of the CA cement and CaSO₄-based compounds is used for applications where no shrinkage is tolerated and prevents the needed for i.e. extra reinforcement or shrinkage joints.

The use of CA-rich binders in cementitious systems has been widely reported and suggested in literature, as described for example in WO2020141379A1. With reference to ES2891675B2, it is clear that CA-rich binders, such as ladle furnace slag, can have hydraulic properties which provide a certain mechanical strength and can be combined with ordinary Portland cement (OPC) and some blast furnace slag. However, the challenge is to form a durable and robust binder without loss in strength after a certain period of time [Cement and Concrete Research 41 (2011) 865-571].

The combination of a ladle furnace slag with activators has been explored in order to overcome this issue. The use of alkali-activators showed an improvement in strength [Construction and Building Materials 123 (2016) 800-805]. The use of ladle furnace slag in combination with CaSO₄ has been documented [Construction and Building Materials 197 (2019) 143-151; Construction and Building Materials 127 (2016) 93-101; WO2023090878A1]. This can result in a more durable binder based on ettringite. However, the challenge lies with the consistency of the reactivity with water and quality of the residue in order to obtain high quality binders and construction materials with sufficient mechanical performance in an acceptable bandwidth of tolerance.

Besides, the use of bauxite residue (BR), also known as red mud, in construction materials has been documented. BR can be used as fine filler with limited to no contribution to the strength. Alternatively, the high alkalinity of BR can be used to an advantage in alkali-activated binder systems. Here the added value is based on the fact that BR can activate vitreous residues such as granulated blast furnace slag, fly ash or calcined clays. For this activation, high temperatures, pressures and/or auxiliary, Na- or K-rich activators are required. These extra conditions limit the functional use of BR in practice due to the low added value which results in large BR storage facilities.

### Problem statement

The use of CA cements known in the state of the art is limited due to the high costs and high ecological footprint that are associated with purity of the raw materials, the high Al₂O₃-content, higher energy consumption and higher production costs. Alternatives to CA cements have been sought.

The use of ladle furnace slag as binding compound is precarious due to the sensitivity of ageing or weathering. This make it hard to control and speed up the setting when this would be desired in a high throughput production environment. An optional heat-treatment step (calcination step) prior to the incorporation of the ladle furnace slag into a hydraulic binder system could be carried out. However, alternatives to this heat-treatment step have been sought, additionally also improving the setting and early strength development (in the first hours or days).

Moreover, the use of bauxite residues is limited, and BR are currently mainly landfilled or used in low value applications. Alternatives to landfill depositing of BR have been sought.

The colouring of certain building materials is desired for aesthetical reasons. In particular, for the colour red, high purity and ultrafine pigments are used for coloration. These are expensive and can only be used at low dosages. This makes it hard to produce colour stable red building products with hydraulic binders. An inexpensive alternative to those pigments would be highly desirable.

### Summary of the invention

According to a first aspect, the present invention provides an inorganic binder composition comprising (A) a ladle furnace slag chemically comprising at least 25 wt% of CaO, at least 10 wt% of Al₂O₃, and a maximum of 25 wt% of SiO₂, (B) a CaSO₄-source, different from compound (A), (C) a retarding compound, different from compounds (A) and (B), (D) a bauxite residue, different from compounds (A), (B) and (C), chemically comprising at least 30 wt% of Fe₂O₃ and at least 2.5 wt% of TiO₂, wherein the ladle furnace slag is at least 20 wt% of the inorganic binder composition, being the sum of (A) + (B) + (C) + (D), the weight ratio between the ladle furnace slag and the CaSO₄-source is in the range from 1:3 to 19:1, the weight ratio between the sum of the ladle furnace slag, the CaSO₄-source and the bauxite residue ((A) + (B) + (D)) and the retarding compound (C) is at least 19:1, and the bauxite residue is present as at least 5 wt% of the inorganic binder composition up to a maximum of 60 wt%, based on the dry mass of the bauxite residue.

The present disclosure solves the aforementioned technical problems as it describes an inorganic binder composition comprising with low ecological footprint, affordable, good workability, stable red colour and excellent early strength.

Moreover, according to a second aspect, the present invention provides a process for producing the inorganic binder composition of the invention, comprising the steps of providing a ladle furnace slag, providing a CaSO₄-source, different from compound (A), providing a retarding compound, different from compounds (A) and (B), providing a bauxite residue, different from compounds (A), (B) and (C), and homogeneously mixing the ladle furnace slag, the CaSO₄-source, the retarding compound and the bauxite residue.

"Homogeneously mixing", as this term is used herein, means that the standard deviation on the composition calculated on at least 10 randomly taken bulk samples of the inorganic binder composition is maximum 10% relative to the mean value. Samples that are not properly mixed tend to have undesired fresh properties and yield weak building products.

Finally, according to a third aspect, the present invention provides for the use of the inorganic binder composition of the invention, comprising combining the binding compound with water and, optionally, aggregates to form a building product.

### Brief Description of the Drawings

Various technical effects and advantages of embodiments of the present invention will now be described with reference to the accompanying figures, in which:
- Figure 1 shows the early compressive strength for the mortar composition as provided for the examples in Table 5,
- Figure 2 shows the colour effect when replacing limestone with bauxite residue,
- Figure 3 shows the early compressive strength for the mortar composition as provided for the examples in Table 6,
- Figure 4 shows the Vicat-measured setting time for the example and counterexample compositions given in Table 6,
- Figure 5 shows the early compressive strength for the mortar composition as provided for the examples in Table 7,
- Figure 6 shows the Vicat-measured setting time for the example and counterexample compositions given in Table 7,
- Figure 7 shows the early compressive strength for the mortar composition as provided for the examples in Table 8,
- Figure 8 shows the Vicat-measured setting time for the example and counterexample compositions given in Table 8, and
- Figure 9 shows the compressive strength for the mortar composition as provided for the examples in Table 9.

### Detailed description of the invention

The present invention will be described with respect to particular embodiments and with reference to certain drawings, but the invention is not limited thereto but only by the claims.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

For the purposes of the invention, the term "comprising" is intended to include the narrower term "consisting of", but not to be synonymous therewith. It is moreover intended that the sum of the percentages of the specified constituents of the composition of the invention is always 100% or can be adjusted to 100% in case of small errors.

For the purpose of the invention, the term "slag" refers herein to a waste material produced during the smelting or refining of metals, which typically occurs by reaction of a flux with impurities.

For the purpose of the invention, the term "cement" refers herein to a substance made for use in mortar or concrete. The term can refer to ordinary Portland cement (OPC). The term "alkali-activated cement" refers to an alternative for OPC, and typically refers to a binder comprising a precursor and an alkali activator.

For the purpose of the invention, the term "d_50" refers herein to a mass-median-diameter, considered to be the average particle size by mass; d_50 may be measured by experimental techniques such as laser diffraction.

### Residues

An important aspect of the invention is the clear distinction between the various slags produced during iron- and steelmaking. All these slags have different chemistry and mineralogy and hence different hydraulic behaviour. The different slags which are encountered are clearly described below:
- Primarily, in the first stage of iron and steel making, iron ore and cokes are processed in the blast furnace. In this stage pig iron is made and the slag produced during the blast furnace operations is known as blast furnace slag (BFS). Commonly the BFS is granulated with water or air resulting in a significant amount of amorphous phases and little to no Ca-AI rich phases. Moreover, the chemistry of this slag is particular richer in SiO₂-content. The use of milled granulated BFS as supplementary cementitious material (SCM) is well-known in the field.
- In a second step, the iron is converted into steel. This can be done during a convertor process such as Linz-Donawitz (LD) steelmaking process or Gilchrist-Thomas-converter process. The slag produced during this LD-process, convertor slag, also known as basic oxygen furnace (BOF) slag. The term 'Steel slag' in literature refers mostly to the slag produced during these processes. In particular the convertor slags' chemistry has a lower Al₂O₃ -content which results in the absences of any Ca-AI rich phases, but a higher Fe-oxide content which results in the presence of Ca-Fe-phases.
- Thirdly, ladle furnace slag or ladle furnace slag (LFS) is slag coming from secondary processes. It is one of the so-called secondary metallurgical slags (SMS), which are generated during the production and refinement of specific alloys such as high-quality steels and stainless steels by secondary metallurgical processes. The steel processed in e.g. basic oxygen furnaces (BOFs) and electric arc furnaces is treated in a ladle furnace to achieve the required chemical composition and temperatures appropriate for casting. For this purpose, different processes are applied, thus generating different types of slag. (Euroslag, 2019). Ladle slag or ladle furnace slag is produced during the production of, amongst other metals and alloys, steel and stainless steel. This slag has in comparison to the previous two slags a high Al₂O₃ content
- Other type of slag is produced during the operations of the electric arc furnace (EAF) which is used to melt steel scrap or direct reduced iron (DRI) can be produced during the steelmaking operations. Similarly, theses EAF slags' chemistry and mineralogy are different than the ladle furnace slags used in this invention and therefore have a different reactivity.
- Another type of SMS is the slag produced during the Argon oxygen decarburization (AOD) process. This process is mainly used to purify stainless steel.

The ladle furnace slag comprises, in terms of chemical composition, at least 25 wt% of CaO. Preferably, the ladle furnace slag comprises at least 30 wt% of CaO, more preferably at least 35 wt% of CaO.

The ladle furnace slag comprises, in terms of chemical composition, at least 10 wt% of Al₂O₃. Preferably, the ladle furnace slag comprises at least 15 wt% of Al₂O₃, more preferably at least 20 wt%.

Preferably, the combined fraction of CaO and Al₂O₃, in terms of chemical composition, is at least 40 wt%, preferably 50 wt%, more preferably 60 wt%.

The weight ratio of Al₂O₃/CaO is at least 0.25. Preferably the weight ratio of Al₂O₃/CaO is in the range from 0.25 to 4, more preferably from 0.3 to 3, even more preferably from 0.4 to 2, still more preferably from 0.5 to 1.

Preferably, the chemistry of the ladle furnace slag comprises iron oxides, preferably in the range from 1 wt% to 60 wt% calculated as Fe₂O₃. More preferably, the FezOs in the ladle furnace slag is in the range from 5 wt% to 40 wt%. Preferably, the SiO₂-content is less than 20 wt%, even more preferably less than 15 wt%.

It should be noted that the interest in this invention is towards the crystalline phases. Preferably, in terms of mineralogic composition, the ladle furnace slag comprises less than 70 wt% of amorphous content, more preferably less than 60 wt%, even more preferably less than 50 wt%, still more preferably less than 40 wt%, more preferably less than 30 wt%. Therefore, it is preferred that the amount of glassy, amorphous materials is limited. The mineralogic constituents are determined by X-ray diffraction (XRD) and quantified via the Rietveld refinement method.

Examples of the chemical composition of ladle furnace slag are shown in Table 1. The values of the chemical composition are determined by X-ray fluorescence (XRF).

Preferably, in terms of mineralogic composition, the sum of dicalcium-silicate phases (C2S-polymorphs) in the ladle furnace slag is comprised between 5 wt% and 35 wt%, more preferably between 15 wt% and 25 wt%.

The ladle furnace slag comprises at least one of the following CaO-Al₂O₃ mineralogic phases: C3A: 3CaO.Al₂O₃, C12A7: 12CaO.7Al₂O₃, CA: CaO.Al₂O₃, CA2: CaO.2Al₂O₃, CA6: CaO.6Al₂O₃. Preferably, in terms of mineralogic composition, the sum of CaO-Al₂O₃ phases (3CaO.Al₂O₃, CaO.Al₂O₃, 12CaO.7Al₂O₃, CaO.2Al₂O₃, CaO.6 Al₂O₃) is more than 5 wt%, more preferably more than 15 wt%.

Preferably, the content of Mayenite (C12A7: 12CaO.7Al₂O₃) in the ladle furnace slag is more than 5 wt%, more preferably more than 10 wt%.

Preferably, the content of hydrate CaO-Al₂O₃-containing phases in the ladle furnace slag, such as garnet i.e. katoite, is more than 5 wt%, more preferably is more than 10 wt%.

Preferably, the maximal metallic content in the ladle furnace slag is less than 5 wt%, more preferably less than 3 wt%, even more preferably less than 1 wt%. Some examples of mineral composition are shown in Table 2.

Bauxite residue (BR), also known as red mud (RM), is a solid waste produced in the Bayer process, the process of alumina extraction from bauxite ores. [Sustainable Concrete Made with Ashes and Dust from Different Sources, 2022]. Due to the presence of Fe₂O₃, the residue has a red colour and combined with the sample particle size it has a strong tinting strength.

Some examples of the chemistry of the BR are given in Table 3. The following chemical features can play a role in the intention:
- The amount of FezOs has to be preferably at least 30 wt%, more preferably at least 35 wt%, even more preferably at least 40wt%, most preferably at least 45 wt%,
- The amount of Al₂O₃ has to be preferably at least 5 wt%, more preferably at least 10 wt%, even more preferably at least 15wt%
- The amount of Na₂O has to be preferably at least 1 wt%, more preferably at least 2 wt%, even more preferably at least 3 wt%
- The amount of TiO₂ has to be preferably at least 2.5 wt%, more preferably at least 3.5 wt%, even more preferably at least 4.5 wt%, most preferably at least 5.5 wt%

Some examples of the mineralogy of the BR are given in Table 4. The colour of the residue is strongly determined by the presence of the iron-oxide rich phases. The amount of hematite is preferably at least 10 wt%, more preferably at least 15 wt%, even more preferably at least 20wt%, most preferably at least 25 wt%,

The BR is by nature a fine residue. This fineness is translated into small d_50 value of the BR which is preferably smaller than 10 µm, more preferably smaller than 8 µm, preferably smaller than 6 µm, preferably smaller than 4 µm.

### Binder

The inorganic binder composition of the invention comprises (A) a ladle furnace slag chemically comprising at least 25 wt% of CaO, at least 10 wt% of Al₂O₃, and a maximum of 25 wt% of SiO₂, (B) a CaSO₄-source, different from compound (A), (C) a retarding compound, different from compounds (A) and (B), (D) a bauxite residue, different from compounds (A), (B) and (C), chemically comprising at least 30 wt% of Fe₂O₃ and at least 2.5 wt% of TiO₂, wherein the ladle furnace slag is at least 20 wt% of the inorganic binder composition, being the sum of (A) + (B) + (C) + (D), the weight ratio between the ladle furnace slag and the CaSO₄-source is in the range from 1:3 to 19:1, the weight ratio between the sum of the ladle furnace slag, the CaSO₄-source and the bauxite residue ((A) + (B) + (D)) and the retarding compound (C) is at least 19:1, and the bauxite residue is present as at least 5 wt% of the inorganic binder composition up to a maximum of 60 wt%, based on the dry mass of the bauxite residue.

Of course, the constituents of the inorganic binder composition of the invention may be held available in separate portions, i.e. as a kit of parts. It is possible to store the ladle furnace slag (A) separately from the CaSO₄-source (B), the retarding compound (C) and the bauxite residue (D), the latter ones being present separately or combined. Moreover, it is possible to store a mixture of the ladle furnace slag (A) with the CaSO₄-source (B) or the retarders (C) and/or the bauxite residue (D) and store the missing part(s) of the composition in any combination or separately. All parts should be combined before use.

The ladle furnace slag is preferably at least 20 wt% of the binding compound, more preferably at least 30 wt%.

The bauxite residue is at least 5 wt% of the binding compound, more preferably at least 10 wt%, more preferably at least 15 wt%.

The bauxite residue is maximum 60 wt% of the binding compound, more preferably maximum 50 wt%, more preferably maximum 40 wt%.

The CA-rich residue, i.e. the ladle furnace slag, has been described extensively in a previous section of the description.

Preferably, the ladle furnace slag is milled into a powder with a particle size distribution d_50 smaller than 63 µm. Preferably, the milling is performed prior to said combination with the CaSO₄-source and/or the retarder. More preferably, the residue is milled into a powder with a particle size distribution d-50 smaller than 25 µm, more preferably smaller than 15µm.

The ladle furnace slag is combined with a CaSO₄-source. Preferably, the CaSO₄-source comprises one or more of the following: CaSO₄ (anhydrite), alfa-CaSO₄.½H₂O (alfa hemi-hydrate), beta-CaSO₄.½₂H₂O (beta hemi-hydrate), CaSO_{4.2}H₂O (gypsum), phosphogypsum, SOs-scrubber gypsum, and a blend material containing CaO or Ca(OH)₂ and Na₂SO₄.

The CaSO₄-source is combined with the ladle furnace slag. The combination of a CA-phase and CaSO₄ results in the formation of an ettringite-based composition when hydrated.

Preferably, the weight ratio between the said ladle furnace slag and said CaSO₄-source is in the range from 1:3 to 19:1, more preferably from 1:1 to 10:1, still more preferably from 2:1 to 5:1.

As mentioned before in the description, the ladle furnace slag is combined with a retarding compound. More preferably, the CA-rich residue is combined with a retarder after the residue has already been combined with the CaSO₄-source.

A retarding compound is chosen from a list of, or is a combination of, conventional retarders for CA-cements such as a boron-containing salt, a carboxylic acid or a salt thereof, a sugar, a lignin-derivate, phosphates or phosphonates. Preferably, the Boron-containing salt is Borax.

More preferably, a carboxylic acid is based on citric acid, tartaric acid, maleic acid, oxalic acid, ethylenediaminete tetraacetic acid (EDTA) or gluconic acid. Still preferably, the lignin-derivate is lignosulfonate.

The weight ratio between the sum of the ladle furnace slag, the CaSO₄-source, the BR ((A) + (B) + (D)) and the retarding compound is at least 19:1, preferably between 19:1 and 10000:1, more preferably between 50:1 and 5000:1, still preferably between 100:1 and 3000:1, preferably between 200:1 and 2000:1.

Preferably, the inorganic binder composition is combined with one or more of the following: metallurgical residues, non-ferrous metal slag, blast furnace slag, steel slag, clays, calcined clays, glass, , and fillers such as milled limestone, quartz or dolomite.

Still preferably, the inorganic binder composition can be combined with water and optionally aggregates to form a binder grout, a mortar or concrete to ultimately form a building product. In more detail, the binder composition as obtained is combined with water. Preferably, the fluid obtained by this combination can be casted into a durable body.

The amount of water needed depends on the desired strength class, as commonly known for conventional cement applications. More preferably, the water to binder composition ratio can be varied, without limitation, between 0.1 and 25, more preferably between 0.2 and 1. Additionally, in order to enhance the flow of the obtained fluid, conventional flow improvers, such as plasticizers or superplasticizers, can be used.

### Experimental methods

- The chemistry of the inorganic compounds is quantified via X-ray fluorescens (XRF) using the XRF S4 Pioneer (Bruker)
- The mineralogy is of the inorganic compounds is determined via X-ray diffraction (XRD) using the D8 Advance (Bruker). The quantification is done using the Rietveld refinement method
- The reported loss-on-ignition (LOI) is determined on dry, de-metallized material at 950°C.
- The reported values for particle size distribution (PSD) are based on measurements using the LS 13 320 Particle Size Analyzer (Beckman-Coulter).
- Compressive strength of the binder is measured on mortar level using beams produced in line with the EN 196-1 procedure with the composition as given in Tables mentioned below.
- The setting time is measured using the Vicat-needle test where the procedure is followed in line with the EN 196-3.
- The slump flow is measured by filling a tube with diameter of 2 cm and height of 5 cm with the mixed mortar composition. The diameter of the mortar after lifting the tube is taken as characteristic value for the flow.

### Experimental Results

The invention will be now described in more details with reference to the following examples, whose purpose is merely illustrative and not intended to limit the scope of the invention.

**Table 1: Ladle furnace slag chemistry**

| **Compound** | **Ladle Slag 1 (wt%)** | **Ladle Slag 2 (wt%)** |
|---|---|---|
| CaO | 41.1 | 50.6 |
| Al2O3 | 23.2 | 24.4 |
| SiO2 | 8.5 | 11.5 |
| MgO | 6.4 | 3.8 |
| Fe2O3 | 9.8 | 0.4 |
| MnO | 2.5 | |
| TiO2 | 0.5 | 3.9 |
| V2O3 | 0.3 | |
| Others | 2.7 | 1.4 |
| *Loss on Ignition* | 4.4 | 1 |

**Table 2: Mineralogy of used ladle furnace slags**

| **Mineral** | **Ladle Slag 1 (wt%)** | **Ladle Slag 2 (wt%)** |
|---|---|---|
| Quartz (SiO2) | 5 | 5 |
| Di-calcium silicate (C2S) | 26 | 29 |
| Garnet (X3Z2(SiO4)3) | 24 | 6 |
| Melilite group ((Ca,Na)₂(Al,Mg,Fe²⁺)(Si,Al)₂O₇) | 6 | |
| Calcite (CaCO3) | 2 | 4 |
| Periclase (MgO) | 7 | 6 |
| Mayenite (Ca₁₂Al₁₄O₃₃ - C12A7) | 13 | 34 |
| Srebrodolskite (Ca₂Fe³⁺₂O₅) | 7 | |
| Wuestite (FeO) | 6 | |
| Hematite (Fe₂O₃) | 4 | |
| Ca3Al2O6 (C3A) | | 6 |
| Brownmillerite. (Ca2(Al,Fe)2O5 - C4AF) | | 5 |
| Others | 4 | 4 |

**Table 3: Bauxite Residue Chemistry**

| **Compound** | **Bauxite Residue 1 (wt%)** | **Bauxite Residue 2 (wt%)** |
|---|---|---|
| CaO | 5,9 | 8,8 |
| Al2O3 | 16,3 | 17,8 |
| SiO2 | 8,0 | 7,2 |
| MgO | 0,4 | 0,3 |
| Fe2O3 | 45,7 | 41,7 |
| Na2O | 3,2 | 4,6 |
| TiO2 | 6,2 | 5,9 |
| Others | 1,2 | 3,8 |
| *Loss on Ignition* | 13,0 | 9,9 |

**Table 4: Bauxite Residue Mineralogy (dry material)**

| **Mineral** | **Bauxite Residue 1 (wt%)** | **Bauxite Residue 2 (wt%)** |
|---|---|---|
| Cancrinite | 5,5 | 4 |
| Anatase | 0,1 | |
| Hematite | 28,6 | 22,3 |
| Rutile | 0,8 | 3 |
| Perovskite | 3,5 | 5,6 |
| Gibbsite | 16,4 | 21,8 |
| Katoite | 3,8 | |
| Carbonate-Apatite | 1,4 | |
| Goethite, aluminian | 29,1 | 18,2 |
| Quartz | 0,5 | 0,4 |
| Calcite | 0,2 | 2,5 |
| Andradite | | 9,2 |
| Amorphous | 10 | 16 |

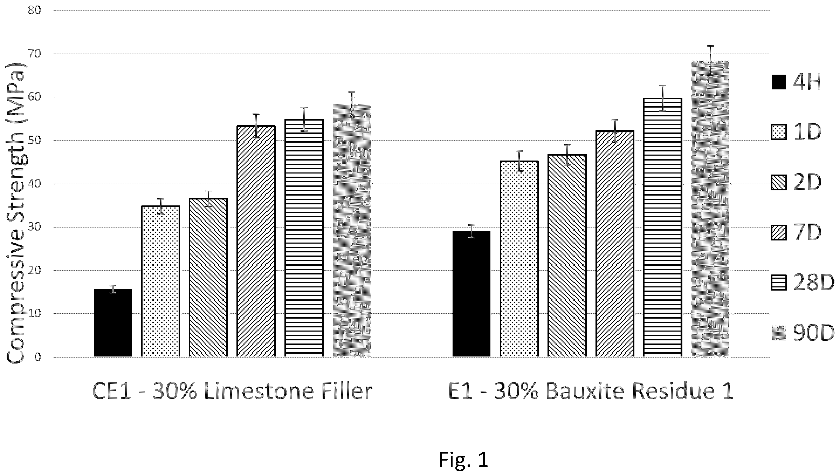

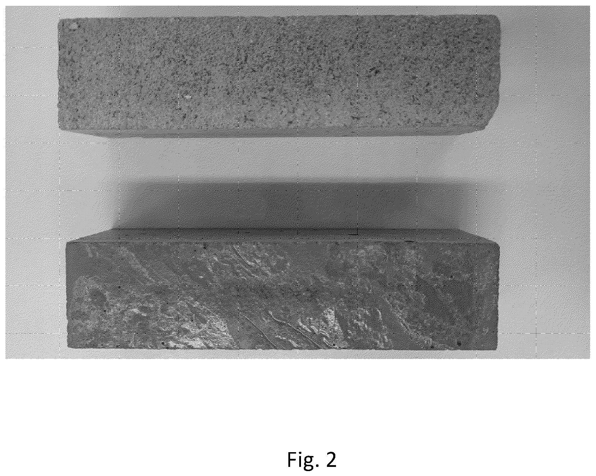

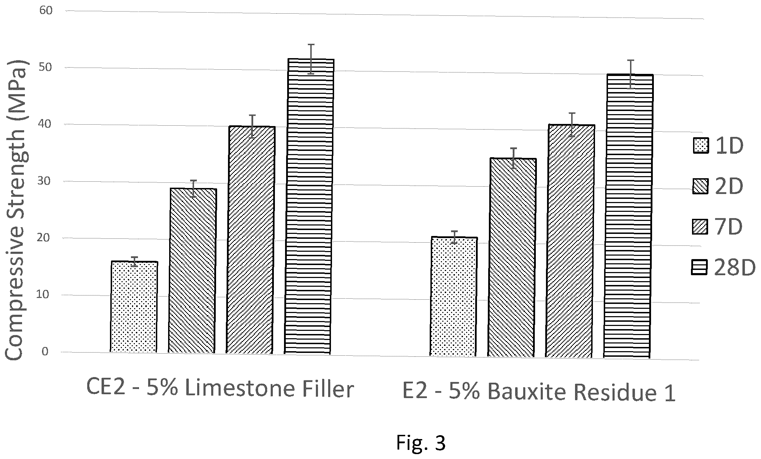

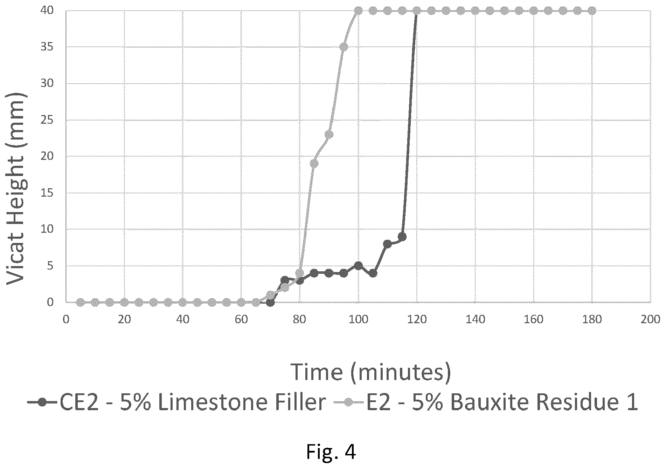

The technical effects, in particular, the improved early strength, shorter setting time and red colour, are demonstrated in the following examples. "4H" refers to four hours and "D" refers to the number of days, respectively. The units in the following Tables are given in grams.
- Example 1 demonstrates the effect in terms of very early, 4 hours after mixing, compressive strength when replacing 30 wt% inert limestone filler with 30 wt% BR. The composition of the mortar is given in Table 5 and the compressive strength development as function of time is given in Figure 1. A clear improvement in early strength can be noticed when replacing a conventional filler, as shown in counter example 1 (CE1) by the bauxite residue, example 1 (E1). In Figure 2 the effect on the colour is demonstrated. It shows 2 conventional mortar beams made according to the compositions given in Table 5. The replacement/addition of BR is changing the colour from ordinary grey into an intense red colour.
- Example 2 demonstrates the effect when 5 wt% of BR is used instead of 5 wt% conventional filler. The composition of the materials is given in Table 6. The composition example 2 (E2) has a higher compressive strength at 1 day (Figure 3) and shorter setting time (Figure 4) than the counterexample with 5 wt% filler (CE2).

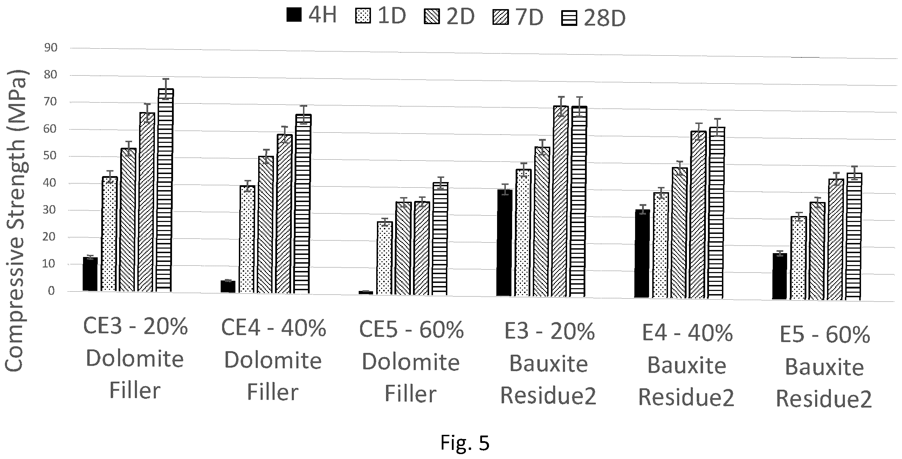

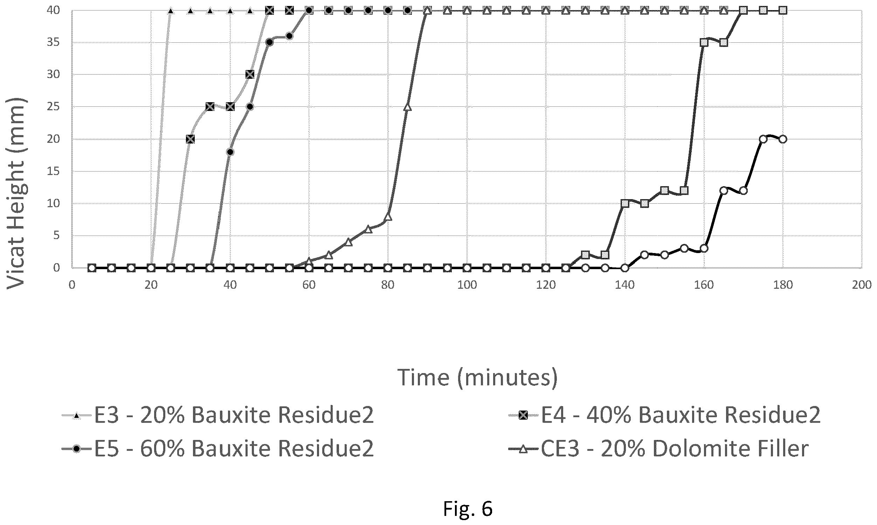

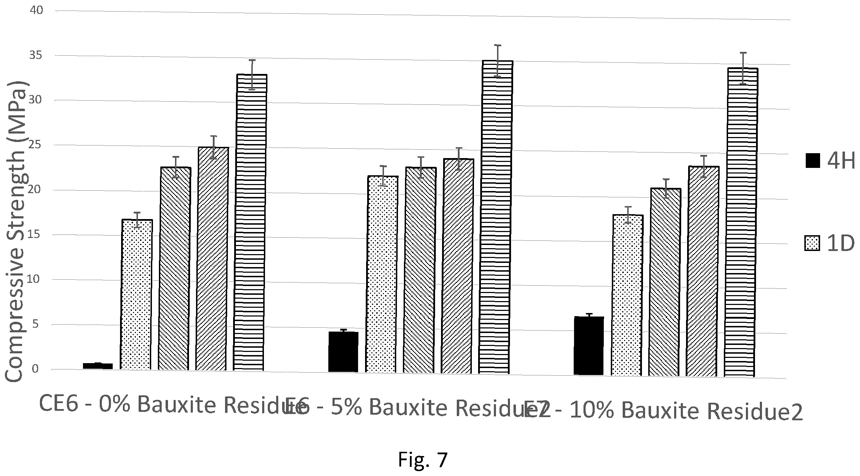

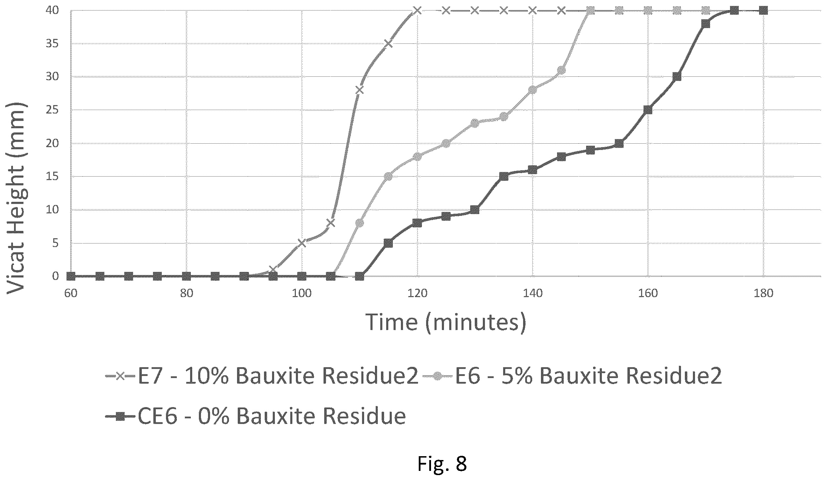

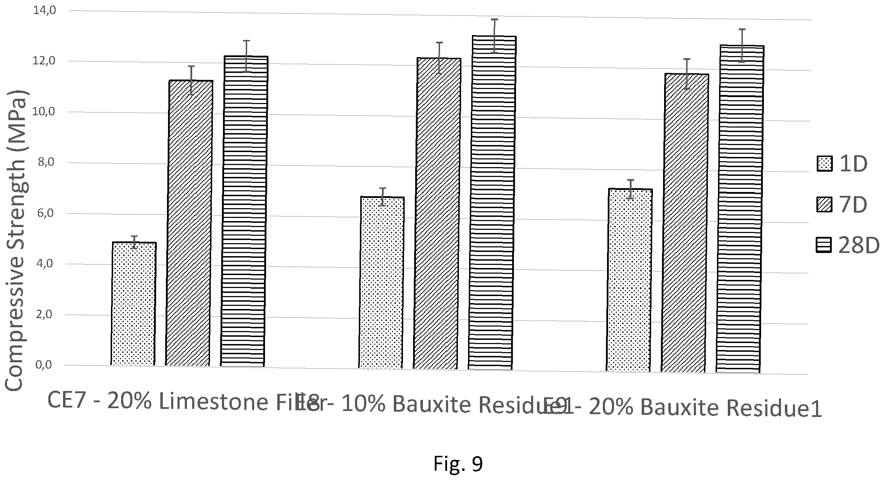

- Examples 3-5 shows the effect of a broad replacement range from 20 wt% to 60 wt% of BR in the binder based on ladle furnace slag (E3-E5). In addition, the same recipes are made with 20 wt% to 60 wt% of filler (CE3 - CE5) as counterexamples. The composition of the materials is given in Table 7. The compressive strength development is given in Figure 5 and the setting time for all the compositions of Table 7 is given in Figure 6. The improved early strength as well as the faster setting time can be clearly noticed in comparison to the counter examples. Moreover, for the higher BR content (60 wt%) the strength at later age is also higher compared to the filler counter example.
- Examples 6-7 show the effect when in the binder ladle furnace slag is replaced by BR for rather small amounts (5 wt% and 10 wt%). The composition is given in Table 8. The improved early strength and setting time are documented in Figure 7 and Figure 8 respectively. Despite the lower amount of ladle furnace slag in the binder, the strength at later age is maintained. It also illustrates the degree of flexibility of the binder in terms of ratios between the different compounds.
- Example 8-9 show the effect in composition with a larger water/binder ratio (0.70). The obtained values are lower which is to be expected, but the overall trend remains the same. The (partial) replacement of the filler (CE 7) by BR (E8 and E9) in the compositions given in Table 9 result also in an improved early compressive strength at 1 day as shown in Figure 9.

**Table 5: Example 1 and counter example for 30% Filler**

| | **CE1** - **30% Limestone Filler** | **E1** - **30% Bauxite Residue 1** |
|---|---|---|
| Ladle Slag 1 | 490 | 490 |
| Limestone filler | 300 | |
| CaSO₄.1/2H₂O | 105 | 105 |
| CaSO₄ | 105 | 105 |
| Tartaric Acid | 2,5 | 2,5 |
| Bauxite residue 1 (dry mass) | | 300 |
| Water | 200 | 200 |
| Sand | 1000 | 1000 |
| Superplasticizer | 2 | 2 |

**Table 6: Example 2 and counter example for 5% filler.**

| | **CE2** - **5% Limestone Filler** | **E2** - **5% Bauxite Residue 1** |
|---|---|---|
| Ladle Slag 1 | 617,5 | 617,5 |
| Limestone Filler | 50 | |
| CaSO₄ | 332,5 | 332,5 |
| Citric Acid | 4 | 4 |
| Borax | 4 | 4 |
| Bauxite residue 1 | | 50 |
| Water | 350 | 350 |
| Sand | 1500 | 1500 |

**Table 7: Examples 3-5 and counterexamples for 20 wt% - 60 wt% BR**

| | **CE3** - **20% Dolomite Filler** | **CE4** - **40% Dolomite Filler** | **CE5** - **60% Dolomite Filler** | **E3** - **20% Bauxite Residue2** | **E4** - **40% Bauxite Residue2** | **E5** - **60% Bauxite Residue2** |
|---|---|---|---|---|---|---|
| Ladle Slag 1 | 640 | 480 | 320 | 640 | 480 | 320 |
| Dolomite Filler | 200 | 400 | 600 | | | |
| CaSO₄.1/2H₂O | 80 | 60 | 40 | 80 | 60 | 40 |
| CaSO₄ | 80 | 60 | 40 | 80 | 60 | 40 |
| Tartaric Acid | 2,5 | 2,5 | 2,5 | 2,5 | 2,5 | 2,5 |
| Sodium Gluconate | 2,5 | 2,5 | 2,5 | 2,5 | 2,5 | 2,5 |
| Bauxite Residue 2 | | | | 200 | 400 | 600 |
| Water | 210 | 210 | 210 | 210 | 210 | 210 |
| Sand | 1000 | 1000 | 1000 | 1000 | 1000 | 1000 |
| Superplasticizer | 2 | 2 | 2 | 2 | 2 | 2 |

**Table 8: Examples 6-7 for 5 wt% and 10 % BR and the counterexample 6 without BR.**

| | **CE6 - 0% Bauxite Residue** | **E6 - 5% Bauxite Residue2** | **E7 -10% Bauxite Residue2** |
|---|---|---|---|
| Ladle Slag 2 | 750 | 700 | 650 |
| CaSO₄.1/2H₂O | 100 | 100 | 100 |
| CaSO₄.2H₂O | 150 | 150 | 150 |
| Tartaric Acid | 5 | 5 | 5 |
| Bauxite residue2 | | 50 | 100 |
| Water | 400 | 400 | 400 |
| Sand | 3000 | 3000 | 3000 |

**Table 9: Examples 8-9 for 5 wt% and 10 % BR and the counterexample 7 without BR.**

| | **CE7 - 20% Limestone Filler** | **E8 - 10% Bauxite Residue1** | **E9 - 20% Bauxite Residue1** |
|---|---|---|---|
| Ladle Slag 1 | 560 | 560 | 560 |
| Limestone Filler | 200 | 100 | |
| CaSO₄.2H₂O | 240 | 240 | 240 |
| Sodium Gluconate | 5 | 5 | 5 |
| Ca(OH)₂ | 5 | 5 | 5 |
| Bauxite residue1 | | 100 | 200 |
| Water | 700 | 700 | 700 |
| Superplasticizer | 1 | 1 | 1 |
| Sand | 6000 | 6000 | 6000 |

## Claims

1. An inorganic binder composition comprising:
(A) a ladle furnace slag chemically comprising at least 25 wt% of CaO, at least 10 wt% of Al₂O₃, and a maximum of 25 wt% of SiO₂,
(B) a CaSO₄-source, different from compound (A),
(C) a retarding compound, different from compounds (A) and (B),
(D) a bauxite residue, different from compounds (A), (B) and (C), chemically comprising at least 30 wt% of FezOs and at least 2.5 wt% of TiO₂,
wherein:
- the ladle furnace slag is at least 20 wt% of the inorganic binder composition, being the sum of (A) + (B) + (C) + (D),
- the weight ratio between the ladle furnace slag and the CaSO₄-source is in the range from 1:3 to 19:1,
- the weight ratio between the sum of the ladle furnace slag, the CaSO₄-source and the bauxite residue ((A) + (B) + (D)) and the retarding compound (C) is at least 19:1.
- the bauxite residue is present as at least 5 wt% of the inorganic binder composition up to a maximum of 60 wt%, based on the dry mass of the bauxite residue.

2. Inorganic binder composition according to claim 1 wherein the ladle furnace slag comprises less than 70 wt% of amorphous constituents.

3. Inorganic binder composition according to any of the preceding claims, wherein the ladle furnace slag comprises at least one of the following CaO-Al₂O₃ mineralogic phases:
- C3A: 3CaO.Al₂O₃,
- C12A7: 12CaO.7Al₂O₃,
- CA: CaO.Al₂O₃,
- CA2: CaO.2Al₂O₃,
- CA6: CaO.6Al₂O₃.

4. Inorganic binder composition according to any of the preceding claims, wherein the ladle furnace slag comprises at least 5 wt% of CaO-Al₂O₃ phases.

5. Inorganic binder composition according to any of the preceding claims, wherein said ladle furnace slag having a weight ratio of Al₂O₃/CaO of at least 0.25.

6. Inorganic binder composition according to any of the preceding claims, comprising said bauxite residue with a particle size distribution d_50 smaller than 10 µm.

7. Inorganic binder composition according to any of the preceding claims, comprising said bauxite residue comprising of at least 10 wt% of hematite mineralogic phase (Fe₂O₃).

8. Inorganic binder composition according to any of the preceding claims, comprising said bauxite residue comprising at least 2 wt% of Na₂O.

9. Inorganic binder composition according to any of the preceding claims, wherein the CaSO₄-source comprises at least one of the following:
- CaSO₄ (anhydrite),
- alfa-CaSO₄.½H₂O (alfa hemi-hydrate),
- beta-CaSO₄.½H₂O (beta hemi-hydrate),
- CaSO₄.2H₂O (gypsum),
- phosphogypsum,
- SOa-scrubber gypsum
- a blend material containing CaO or Ca(OH)₂ and Na₂SO₄.

10. Inorganic binder composition according to any of the preceding claims, wherein the retarding compound comprises one or more of the following:
- boron-containing salt,
- a carboxylic acid or a salt thereof,
- phosphonate
- a sugar,
- a lignin-derivate,
- alkali-carbonates,
- phosphate.

11. Inorganic binder composition according to claim 10 wherein the carboxylic acid is one of the following: citric acid, gluconic acid, tartaric acid.

12. Inorganic binder composition according to any preceding claims, wherein the ratio between said the ladle furnace slag and the retarding compound is in the range from 10000:1 to 100:1.

13. Inorganic binder composition according to any of the preceding claims, wherein the binder composition is mixed with one or more of the following:
- metallurgical residues,
- non-ferrous metal slag,
- blast furnace slag,
- steel slag,
- clays or calcined clays,
- glass,
- fillers such as ground limestone, dolomite or quartz
to obtain a binder mix.

14. Inorganic binder composition according to any of the preceding claims, comprising milling said ladle furnace slag into a powder with a particle size distribution d_50 smaller than 63 µm prior to said combination with the CaSO₄-source and/or the retarder.

15. A Process for producing an inorganic binder composition according to any of the preceding claims, comprising the steps of:
- providing a ladle furnace slag,
- providing a CaSO₄-source, different from compound (A),
- providing a retarding compound, different from compounds (A) and (B),
- providing a bauxite residue, different from compounds (A), (B) and (C),
- homogeneously mixing the ladle furnace slag, the CaSO₄-source, the retarding compound and the bauxite residue.

16. Use of the inorganic binder composition according to any of claims 1 to 14, comprising combining the binding compound with water and optionally aggregates to form a building product.
